# EUROPÄISCHE PATENTANMELDUNG

(11) **EP 3 882 317 A1**
(43) Veröffentlichungstag der Anmeldung: **22.09.2021**
(21) Anmeldenummer: 20163701.4
(22) Anmeldetag: 17.03.2020
(51) Int. Cl.: C09D 5/16

(54) **POLYURETHANDISPERSIONEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft wässrige Dispersion enthaltend mindestens ein Polyurethan und mindestens eine Verbindung mit biozider Wirkung, wobei die mindestens eine Verbindung mit biozider Wirkung mindestens eine Peroxid-Gruppe enthält und in einer Menge von 0,01 bis 1000 mmol/kg, bezogen auf die gesamte wässrige Dispersion, vorliegt, ein Verfahren zur Herstellung einer biozidfreien wässrigen Polyurethan-Dispersion, umfassend mindestens die Schritte (A) Bereitstellen einer wässrigen Dispersion enthaltend mindestens ein Polyurethan und mindestens eine Verbindung mit biozider Wirkung, wobei die mindestens eine Verbindung mit biozider Wirkung mindestens eine Peroxid-Gruppe enthält und in einer Menge von 0,01 bis 1000 mmol/kg, bezogen auf die gesamte wässrige Dispersion, vorliegt und (B) Behandeln der wässrigen Dispersion aus Schritt (A) mit mindestens einer antioxidativ wirkenden Verbindung, um die biozidfreie wässrige Polyurethan-Dispersion zu erhalten, sowie die Verwendung mindestens einer antioxidativ wirkenden Verbindung zur Behandlung einer wässrigen Dispersion enthaltend mindestens ein Polyurethan und mindestens eine Verbindung mit biozider Wirkung, wobei die mindestens eine Verbindung mit biozider Wirkung mindestens eine Peroxid-Gruppe enthält und in einer Menge von 0,01 bis 1000 mmol/kg, bezogen auf die gesamte wässrige Dispersion, vorliegt.

## Beschreibung

Die vorliegende Erfindung betrifft wässrige Dispersion enthaltend mindestens ein Polyurethan und mindestens eine Verbindung mit biozider Wirkung, wobei die mindestens eine Verbindung mit biozider Wirkung mindestens eine Peroxid-Gruppe enthält und in einer Menge von 0,01 bis 1000 mmol/kg, bezogen auf die gesamte wässrige Dispersion, vorliegt, ein Verfahren zur Herstellung einer biozidfreien wässrigen Polyurethan-Dispersion, umfassend mindestens die Schritte (A) Bereitstellen einer wässrigen Dispersion enthaltend mindestens ein Polyurethan und mindestens eine Verbindung mit biozider Wirkung, wobei die mindestens eine Verbindung mit biozider Wirkung mindestens eine Peroxid-Gruppe enthält und in einer Menge von 0,01 bis 1000 mmol/kg, bezogen auf die gesamte wässrige Dispersion, vorliegt und (B) Behandeln der wässrigen Dispersion aus Schritt (A) mit mindestens einer antioxidativ wirkenden Verbindung, um die biozidfreie wässrige Polyurethan-Dispersion zu erhalten, sowie die Verwendung mindestens einer antioxidativ wirkenden Verbindung zur Behandlung einer wässrigen Dispersion enthaltend mindestens ein Polyurethan und mindestens eine Verbindung mit biozider Wirkung, wobei die mindestens eine Verbindung mit biozider Wirkung mindestens eine Peroxid-Gruppe enthält und in einer Menge von 0,01 bis 1000 mmol/kg, bezogen auf die gesamte wässrige Dispersion, vorliegt.

Wässrige Polyurethan-Dispersionen, die Zugabe von biozid wirkenden Reagenzien, um die Dispersionen zu konservieren, sowie die Verwendung entsprechender Dispersionen sind dem Fachmann bereits bekannt.

DE 19810819 offenbart ein Verfahren zur Behandlung von flüssigen Beschichtungsstoffen, die ein Topfkonservierungsmittel enthalten. Dazu wird dem Beschichtungsstoff unmittelbar vor dessen Verwendung ein Reagenz zugegeben, welches das Topfkonservierungsmittel zersetzt. Als geeignete Topfkonservierungsmittel werden Isothiazolinone offenbart, insbesondere als Topfkonservierungsmittel geeignet sind beispielsweise Chlormethylisothiazolinon, Methylisothiazolinon, Benzisothiazolinon, Octylisothiazolinon, oder Methylitrimethylenisothiazolinon. Als Reagenzien, die diese Konservierungsmittel zersetzen können, werden insbesondere Natriumthiosulfat, Natriumbisulfit, Natriummetabisulfit oder Natriumsulfit genannt.

WO 2002/007698 offenbart kosmetisch oder dermatologisch aktive Zubereitungen, die ein Antioxidans enthalten, welches Peroxide oder Hydroperoxide in die entsprechenden Alkohole überführen kann.

US 2018/258300 offenbart eine Druckertinten-Zusammensetzung, enthaltend Kunstharz-Partikel, beispielsweise Polyurethan-Partikel, Pigmente, Glykolether und Wasser. Diese Zusammensetzung kann Zusatzstoffe enthalten, beispielsweise Konservierungsmittel. Des Weiteren kann das Wasser, mit dem die Zusammensetzung hergestellt wird, im Vorhinein mit Wasserstoffperoxid behandelt werden, um Keime zu entfernen.

US 2017/156340 offenbart antimikrobiell wirkende Beschichtungen für Implantate, medizinische Instrumente, Geräte oder Krankenhausausstattung. Dazu wird an der Oberfläche ein mit einem Metallderivat versehenes Polymer angebracht, welches in Gegenwart von Wasserstoffperoxid eine biozide Wirkung entfaltet.

JP 2018 053 170 offenbart eine Druckertinte enthaltend eine Dispersion von quervernetzbarem, urethanbasiertem Harz. Die Druckertinte kann auch Konservierungsmittel enthaltend. Des Weiteren kann das Wasser, welches zur Herstellung der Druckertinte verwendet wird, zuvor mit Wasserstoffperoxid behandelt werden, um es keimfrei zu machen.

Aufgabe der vorliegenden Erfindung ist es, eine wässrige Polyurethandispersion bereitzustellen, die zum einen bis zu ihrer Verarbeitung, insbesondere beim Kunden, eine gleichbleibend hohe Qualität und gleichbleibend gute Gebrauchseigenschaften aufweist, und des Weiteren bei ihrer Verarbeitung, insbesondere zur Herstellung von Artikeln, Kosmetika, Beschichtungen, Klebstoffen oder Klebstoffschichten, weitgehend frei von den Verarbeitungsprozess gegebenenfalls störenden biozid wirkenden Verbindungen ist. Demnach soll es insbesondere möglich sein, vor der Verwendung der Polyurethan-Dispersion die vorhandenen biozid wirkenden Verbindungen ohne großen Aufwand und weitgehend rückstandsfrei zu entfernen.

Diese Aufgaben werden gelöst durch die erfindungsgemäße wässrige Dispersion enthaltend mindestens ein Polyurethan und mindestens eine Verbindung mit biozider Wirkung, wobei die mindestens eine Verbindung mit biozider Wirkung mindestens eine Peroxid-Gruppe enthält und in einer Menge von 0,01 bis 1000 mmol/kg, bezogen auf die gesamte wässrige Dispersion, vorliegt.

Des Weiteren werden diese Aufgaben gelöst durch das erfindungsgemäße Verfahren zur Herstellung einer biozidfreien wässrigen Polyurethan-Dispersion, umfassend mindestens die Schritte
(A) Bereitstellen einer wässrigen Dispersion enthaltend mindestens ein Polyurethan und mindestens eine Verbindung mit biozider Wirkung, wobei die mindestens eine Verbindung mit biozider Wirkung mindestens eine Peroxid-Gruppe enthält und in einer Menge von 0,01 bis 1000 mmol/kg, bezogen auf die gesamte wässrige Dispersion, vorliegt, und
(B) Behandeln der wässrigen Dispersion aus Schritt (A) mit mindestens einer antioxidativ wirkenden Verbindung, um die weitgehend biozidfreie wässrige Polyurethan-Dispersion zu erhalten.

Diese Aufgaben werden auch gelöst durch die erfindungsgemäße Verwendung mindestens einer antioxidativ wirkenden Verbindung zur Behandlung einer wässrigen Dispersion enthaltend mindestens ein Polyurethan und mindestens eine Verbindung mit biozider Wirkung, wobei die mindestens eine Verbindung mit biozider Wirkung mindestens eine Peroxid-Gruppe enthält und in einer Menge von 0,01 bis 1000 mmol/kg, bezogen auf die gesamte wässrige Dispersion, vorliegt.

Die vorliegende Erfindung wir im Folgenden detailliert beschrieben.

Die erfindungsgemäße wässrige Dispersion enthält mindestens ein Polyurethan und mindestens eine Verbindung mit biozider Wirkung, wobei die mindestens eine Verbindung mit biozider Wirkung mindestens eine Peroxid-Gruppe enthält und in einer Menge von 0,01 bis 1000 mmol/kg, bezogen auf die gesamte wässrige Dispersion, vorliegt.

Erfindungsgemäß kann im Allgemeinen jedes dem Fachmann bekannte Polyurethan in wässriger Dispersion eingesetzt werden.

Erfindungsgemäß wird unter wässrigen Dispersionen enthaltend mindestens ein Polyurethan eine wässrige Dispersion enthaltend Polyurethan-Polymere und/oder Polyurethan-Polyharnstoff-Polymeren verstanden.

Erfindungsgemäß bevorzugte Polyurethane enthalten als Aufbaukomponenten:
(a) mindestens eine Diol- und/oder Polyolkomponente,
(b) mindestens eine Di- und/oder Polyisocyanatkomponente,
(c) mindestens eine mindestens eine hydrophilierende Gruppe aufweisende Komponente,
(d) gegebenenfalls mono-, di-, und/oder tri-aminofunktionelle und/oder hydroxyaminofunktionelle Verbindungen und
(e) gegebenenfalls sonstige isocyanatreaktive Verbindungen.

Geeignete Diol- und/oder Polyolkomponenten (a) sind Verbindungen mit mindestens zwei gegenüber Isocyanaten reaktionsfähigen Wasserstoffatomen und einem mittleren Molekulargewicht von bevorzugt 62 bis 18000 g/mol, besonders bevorzugt 62 bis 4000 g/mol.

Beispiele für geeignete Aufbaukomponenten (a) sind Polyetherpolyole Polyesterpolyole, Polycarbonatpolyole, Polylactone und Polyamide. Bevorzugte Polyole (a) weisen bevorzugt 2 bis 4, besonders bevorzugt 2 bis 3 Hydroxylgruppen, ganz besonders bevorzugt 2 Hydroxylgruppen, auf. Auch Gemische verschiedener derartiger Verbindungen kommen in Frage.

Während die Lehre der vorliegenden Erfindung grundsätzlich mit jedem dispergierten Polyurethan- bzw. Polyurethan-Harnstoff-Polymer verwirklicht werden kann, enthält das in der erfindungsgemäßen wässrigen Dispersion vorliegende mindestens eine Polyurethan als Komponente (a) bevorzugt ein oder mehrere Polyesterpolyole und/oder ein oder mehrere Polyetherpolyole und/oder ein oder mehrere Polycarbonatpolyole. Wässrige Dispersion nach Anspruch 1, dadurch gekennzeichnet, dass das mindestens eine Polyurethan auf Polyetherpolyolen und/oder Polyesterpolyolen und/oder Polycarbonatpolyolen basiert.

Die vorliegende Erfindung betrifft daher bevorzugt die erfindungsgemäße wässrige Dispersion, wobei das mindestens eine Polyurethan auf mindestens einem Polyesterpolyol, bevorzugt Polyesterdiol, und/oder mindestens einem Polyetherpolyol, bevorzugt Polyetherdiol, und/oder mindestens einem Polycarbonatpolyol, bevorzugt Polycarbonatdiol, basiert.

Als Polyesterpolyole kommen insbesondere lineare Polyesterdiole oder auch schwach verzweigte Polyesterpolyole in Betracht, wie sie in bekannter Weise aus aliphatischen, cycloaliphatischen oder aromatischen Di- oder Polycarbonsäuren, beispielsweise Bernstein-, Methylbernstein-, Glutar-, Adipin-, Pimelin-, Kork-, Azelain-, Sebacin-, Nonandicarbon-, Decandicarbon-, Terephthal-, iso-Phthal-, o-Phthal-, Tetrahydrophthal-, Hexahydrophthal-, Cyclohexandicarbon-, Malein-, Fumar-, Malon- oder Trimellitsäure, sowie Säureanhydriden, beispielsweise o-Phthal-, Trimellit- oder Bernsteinsäureanhydrid oder deren Gemische mit mehrwertigen Alkoholen, beispielsweise Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische, gegebenenfalls unter Mitverwendung höherfunktioneller Polyole, beispielsweise Trimethylolpropan, Glycerin oder Pentaerythrit, hergestellt werden können. Als mehrwertige Alkohole zur Herstellung der Polyesterpolyole kommen natürlich auch cycloaliphatische und/oder aromatische Di- und Polyhydroxylverbindungen in Frage. Anstelle der freien Polycarbonsäure können auch die entsprechenden Polycarbonsäureanhydride oder entsprechende Polycarbonsäureester von niedrigen Alkoholen oder deren Gemische zur Herstellung der Polyester verwendet werden.

Bei den Polyesterpolyolen kann es sich auch um Homo- oder Mischpolymerisate von Lactonen handeln, die bevorzugt durch Anlagerung von Lactonen oder Lactongemischen, wie Butyrolacton, ε-Caprolacton und/oder Methyl-s-caprolacton an geeignete di- und/oder höherfunktionelle Startermoleküle, beispielsweise die vorstehend als Aufbaukomponenten für Polyesterpolyole genannten niedermolekularen, mehrwertigen Alkohole erhalten werden. Die entsprechenden Polymerisate des ε-Caprolactons sind bevorzugt.

Auch Hydroxylgruppen aufweisende Polycarbonate kommen als Polyhydroxylkomponente (a) in Betracht, beispielsweise solche, die durch Umsetzung von Diolen wie 1,4-Butandiol und/oder 1,6-Hexandiol mit Diarylcarbonaten, beispielsweise Diphenylcarbonat, Dialkylcarbonaten, beispielsweise Dimethylcarbonat oder Phosgen hergestellt werden können. Durch die zumindest teilweise Verwendung von Hydroxylgruppen aufweisenden Polycarbonaten kann die Hydrolysebeständigkeit der Polyurethan- bzw. Polyurethan-Harnstoff-Dispersionsklebstoffe verbessert werden, falls die erfindungsgemäßen Dispersionen zur Herstellung von Klebstoffen verwendet werden.

Als Polyetherpolyole geeignet sind beispielsweise die Polyadditionsprodukte der Styroloxide, des Ethylenoxids, Propylenoxids, Tetrahydrofurans, Butylenoxids, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole. Als Aufbaukomponenten (a) insbesondere geeignete Polyetherpolyole sind die Homo-, Misch- und Pfropfpolymerisate des Propylenoxids, des Ethylenoxids und des Tetrahydrofurans, welche durch Anlagerung der genannten Epoxide bzw. des Tetrahydrofurans an niedermolekulare Di- oder Triole, wie sie oben als Aufbaukomponenten für Polyesterpolyole genannte werden oder an höherfunktionelle niedermolekulare Polyole, beispielsweise Pentaerythrit oder Zucker oder an Wasser zugänglich sind.

Ebenfalls geeignete Komponenten (a) sind niedermolekulare Diole, Triole und/oder Tetraole, beispielsweise Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12, Neopentylglykol, 1,4-Cyclohexandiol, 1,4-Cyclohexan-dimethanol, 1,4-, 1,3-, 1,2-Dihydroxybenzol oder 2,2-Bis-(4-hydroxyphenyl)-propan (Bisphenol A), TCD-Diol, Trimethylolpropan, Glycerin, Pentaerythrit, Dipenthaerytrit oder deren Gemische, gegebenenfalls unter Mitverwendung weiterer nicht genannter Diole bzw. Triole.

Als Polyole können auch Umsetzungsprodukte der genannten Polyole, insbesondere der niedermolekularen Polyole, mit Ethylen- und/oder Propylenoxid eingesetzt werden.

Die niedermolekularen Komponenten (a) haben bevorzugt ein Molekulargewicht von 62 bis 400 g/mol und werden weiter bevorzugt in Kombination mit den oben beschriebenen Polyesterpolyolen, Polylactonen, Polyetherpolyolen und/oder Polycarbonatpolyolen eingesetzt.

Die Polyolkomponente (a) ist in dem erfindungsgemäßen Polyurethan bevorzugt zu 20 bis 95 Gew.-%, besonders bevorzugt zu 30 bis 90 Gew.-%, und ganz besonders bevorzugt zu 65 bis 90 Gew.-%, enthalten, wobei die Summe der vorhandenen Komponenten (a), (b), (c), gegebenenfalls (d) und gegebenenfalls (e) jeweils 100 Gew.-% ergibt.

Als Komponenten (b) sind beliebige organische Verbindungen geeignet, die mindestens zwei freie Isocyanatgruppen pro Molekül aufweisen. Bevorzugt werden Diisocyanate der allgemeinen Formel Y(NCO)₂ eingesetzt, wobei Y für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoffatomen, einen zweiwertigen aromatischen Kohlenwasserstoffrest mit 6 bis 15 Kohlenstoffatomen oder einen zweiwertigen araliphatischen Kohlenwasserstoffrest mit 7 bis 15 Kohlenstoffatomen steht.

Beispiele derartiger bevorzugt einzusetzender Diisocyanate sind Tetramethylendiisocyanat, Methylpentamethylendiisocyanat, Pentamethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethyl-cyclohexan (Isophorondiisocyanat; IPDI), 4,4'-Diisocyanato-dicyclohexyl-methan, 4,4'-Diisocyanato-dicyclohexylpropan-(2,2), 1,4-Di-isocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, Tetramethylxylylendiisocyanat, p-Xylylendiisocyanat, p-Isopropylidendiisocyanat sowie aus diesen Verbindungen bestehende Gemische.

Neben diesen einfachen Diisocyanaten sind auch solche Polyisocyanate geeignet, die Heteroatome in dem die Isocyanatgruppen verknüpfenden Rest enthalten und/oder eine Funktionalität von mehr als 2 Isocyanatgruppen pro Molekül besitzen. Erstere sind beispielsweise durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Carbodiimid-, Imino-oxadiazindion- und/oder Oxadiazintrionstruktur. Als Beispiel für ein nicht-modifiziertes Polyisocyanat mit mehr als 2 Isocyanatgruppen pro Molekül sei beispielsweise 4-iso-Cyanatomethyl-1,8-octandiisocyanat (Nonantriisocyanat) genannt.

Bevorzugte Diisocyanate (b) sind Pentamethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethyl-cyclohexan, 4,4'-Diisocyanato-dicyclohexyl-methan, 1,3- und 1,4-Bis-(isocyanatomethyl)benzol, 1,3- und 1,4-Bis(1-isocyanato-1-methylethyl)-benzol, Bis(4-(1-isocyanato-1-methylethyl)phenyl)-carbonat, 4,4'-Diisocyanato-dicyclohexylpropan-(2,2), 1,4-Diisocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, Tetramethylxylylendiisocyanat, p-Xylylendiisocyanat, p-Isopropylidendiisocyanat, sowie aus diesen Verbindungen bestehende Gemische.

Besonders bevorzugte Komponenten (b) sind 2,4-Diisocyanatotoluol, 2,6-Diisocyanatotoluol, Hexamethylendiisocyanat, 4,4'-Diisocyanato-dicyclohexyl-methan, 1-Isocyanato-3,3,5-trimethyl-5-isocyanatomethylcyclohexan, sowie aus diesen Verbindungen bestehende Gemische.

Komponente (b) ist in dem erfindungsgemäß eingesetzten Polyurethan in einer Menge von im Allgemeinen 5 bis 60 Gew.-%, bevorzugt 6 bis 45 Gew.-%, und besonders bevorzugt 7 bis 25 Gew.-%, enthalten, wobei die Summe der vorhandenen Komponenten (a), (b), (c), gegebenenfalls (d) und gegebenenfalls (e) jeweils 100 Gew.-% ergibt.

Geeignete Komponenten (c) sind beispielsweise Sulphonat- oder Carboxylatgruppen enthaltende Komponenten, beispielsweise Diaminoverbindungen bzw. Dihydroxyverbindungen, die zusätzlich Sulfonat- und/oder Carboxylatgruppen tragen, beispielsweise die Natrium-, Lithium-, Kalium-, tert.-Amin-Salze der N-(2-Aminoethyl)-2-aminoethansulfonsäure, der N-(3-Aminopropyl)-2-aminoethansulfonsäure, der N-(3-Aminoproyl)-3-aminopropansulfonsäure, der N-(2-Aminoethyl)-3-aminopropansulphonsäure, der analogen Carbonsäuren, der Dimethylolpropionsäure, der Dimethylolbuttersäure, der Umsetzungsprodukte im Sinne einer Michaeladdition von 1 mol Diamin, beispielsweise 1,2-Ethandiamin oder Isophorondiamin, mit 2 mol Acrylsäure oder Maleinsäure.

Die Säuren werden bevorzugt direkt in Ihrer Salzform als Sulphonat bzw. Carboxylat eingesetzt. Es ist jedoch auch möglich, die zur Salzbildung notwendigen Neutralisationsmittel anteilig oder vollständig erst während oder nach der Herstellung der Polyurethane zuzugeben.

Für die Salzbildung besonders gut geeignete und bevorzugte tert. Amine sind beispielsweise Triethylamin, Dimethylcyclohexylamin und/oder Ethyldiisopropylamin. Es können auch andere Amine zur Salzbildung eingesetzt werden, beispielsweise Ammoniak, Diethanolamin, Triethanolamin, Dimethylethanolamin, Methydiethanolamin, Aminomethylpropanol und auch Mischungen der genannten und auch anderer Amine. Sinnvollerweise werden diese Amine erst nach Bildung des Prepolymers zugegeben.

Es ist auch möglich andere Neutralisationsmittel, beispielsweise Natrium-, Kalium-, Lithium, Calciumhydroxid, für Neutralisationszwecke einzusetzen.

Weitere geeignete Komponenten (c) sind nichtionisch hydrophilierend wirkende, mono- oder difunktionelle Polyether auf Basis von auf Alkoholen oder Aminen gestarteten Ethylenoxid-Polymeren oder Ethylenoxid/Propylenoxid-Copolymeren, beispielsweise Polyether LB 25 (Covestro Deutschland AG, Leverkusen, Deutschland) oder MPEG 750, d.h. Methoxypolyethylenglykol mit einem Molekulargewicht von 750 g/mol, beispielsweise unter dem Markennamen Pluriol® 750 der BASF SE, Deutschland, erhältlich.

Bevorzugte Komponenten (c) sind N-(2-Aminoethyl)-2-aminoethansulfonat, N-(2-Aminoethyl)-2-aminoethancarboxylat und die Salze der Dimethylolpropionsäure und der Dimethylolbuttersäure.

Komponente (c) ist in dem erfindungsgemäßen Polyurethan bevorzugt in einer Menge von 0,1 bis 15 Gew.-%, besonders bevorzugt 0,5 bis 10 Gew.-%, ganz besonders bevorzugt 0,8 bis 5 Gew.-%, und noch weiter bevorzugt 0,9 bis 3,0 Gew.-%, enthalten, wobei die Summe der vorhandenen Komponenten (a), (b), (c), gegebenenfalls (d) und gegebenenfalls (e) jeweils 100 Gew.-% ergibt.

Erfindungsgemäß geeignete Komponenten (d) sind mono-, di-, trifunktionelle Amine und/oder mono-, di-, trifunktionelle Hydroxyamine, beispielsweise aliphatische und/oder alicyclische primäre und/oder sekundäre Monoamine, beispielsweise Ethylamin, Diethylamin, die isomeren Propyl- und Butylamine, höhere linearaliphatische Monoamine und cycloaliphatische Monoamine, beispielsweise Cyclohexylamin. Weitere Beispiele sind Aminoalkohole, d. h. Verbindungen, die in einem Molekül Amino- und Hydroxylgruppen enthalten, beispielsweise Ethanolamin, N-Methylethanolamin, Diethanolamin, Diisopropanolamin, 1,3-Diamino-2-propanol, N-(2-Hydroxyethyl)-ethylendiamin, N,N-Bis(2-Hydroxyethyl)-ethylendiamin und 2-Propanolamin.

Weitere Beispiele sind Diamine und Triamine, beispielsweise 1,2-Ethandiamin, 1,6-Hexamethylendiamin, 1-Amino-3,3,5-trimethyl-5-aminomethyl-cyclohexan (Isophorondiamin), Piperazin, 1,4-Diaminocyclohexan, Bis-(4-amino-icyclohexyl)-methan und Diethylentriamin.

Weiterhin kommen Adipinsäuredihydrazid, Hydrazin bzw. Hydrazinhydrat in Frage. Selbstverständlich können auch Mischungen mehrerer der genannten, ggf. auch zusammen mit nicht genannten Verbindungen (d) eingesetzt werden.

Bevorzugte Komponenten (d) sind 1,2-Ethandiamin, 1-Amino-3,3,5-trimethyl-5-aminomethyl-cyclohexan, Diethylentriamin, Diethanolamin, Ethanolamin, N-(2-Hydroxyethyl)-ethylendiamin und N,N-Bis(2-Hydroxyethyl)-ethylendiamin.

Komponenten (d) dienen als di- oder trifunktionelle Kettenverlängerungsmittel bevorzugt dazu, höhere Molekulargewichte aufzubauen oder als monofunktionelle Verbindungen, Molekulargewichte zu begrenzen und/oder ggf. zusätzlich weitere reaktive Gruppen, wie z.B. freie Hydroxylgruppen, einzubauen. Wenn auf den Einsatz der (Poly)amine (d) verzichtet wird, entstehen als Polymere reine Polyurethane, die weiter bevorzugt keine Harnstoffgruppen enthalten.

Komponente (d) ist in dem erfindungsgemäßen Polyurethan bevorzugt in einer Menge von 0 bis 10 Gew.-%, besonders bevorzugt 0 bis 5 Gew.-%, und ganz besonders bevorzugt 0,2 bis 3 Gew.-%, enthalten, wobei die Summe der vorhandenen Komponenten (a), (b), (c), gegebenenfalls (d) und gegebenenfalls (e) jeweils 100 Gew.-% ergibt.

Die erfindungsgemäß ggf. mit zu verwendende Komponenten (e) können beispielsweise aliphatische, cycloaliphatische oder aromatische Monoalkohole mit 2 bis 22 C-Atomen, beispielsweise Ethanol, Butanol, Hexanol, Cyclohexanol, Isobutanol, Benzylalkohol, Stearylalkohol, 2-Ethylethanol, und für Isocyanatgruppen gebräuchliche, unter erhöhten Temperaturen wieder abspaltbare Blockierungsmittel, beispielsweise Butanonoxim, Dimethylpyrazol, Caprolactam, Malonester, Triazol, Dimethyltriazol, tert.-Butyl-benzylamin, Cyclopentanoncarboxyethylester, sein.

Komponenten (e) können in dem erfindungsgemäßen Polyurethan bevorzugt in einer Menge von 0 bis 20 Gew.-%, besonders bevorzugt 0 bis 10 Gew.-%, enthalten sein, wobei die Summe der vorhandenen Komponenten (a), (b), (c), gegebenenfalls (d) und gegebenenfalls (e) jeweils 100 Gew.-% ergibt.

Die Mitverwendung von Komponente (e) kann beispielsweise zu erfindungsgemäßen Polyurethan-Dispersionen führen, die zusätzlich zu den reaktiven Carboxylgruppen weitere reaktive Gruppen enthalten, was beispielsweise die Anwendung verschiedener Vernetzungsmechanismen, beispielsweise Dual Cure, ermöglicht, um spezielle Eigenschaften, beispielsweise eine zweistufige, ggf. zeitlich versetzte, Aushärtung oder besonders hohe Vernetzungsdichte zu erzielen.

Die lateralen und/oder terminalen Carboxylgruppen können prinzipiell über jede der Aufbaukomponenten (a) bis (e) in das Polymergerüst eingebaut werden. Bevorzugt werden sie über die Komponenten (c), (d) und/oder (e) eingebaut.

Ein Einbau über die Komponente (c) kann beispielsweise durch Verwendung von Dimethylolpropionsäure oder Dimethylolbuttersäure erfolgen, indem kein Neutralisationsmittel oder Neutralisationsmittel im stöchiometrischen Unterschuss zugegeben wird.

Zum Einbau von Carboxylgruppen als Komponenten (d) geeignet sind beispielsweise Verbindungen, die jeweils nur eine isocyanatreaktive Aminogruppe enthalten und somit bei der Herstellung der erfindungsgemäßen Polyurethane durch Umsetzung mit der Isocyanatkomponente zu endständigen (terminalen) Carboxylgruppen führen. Geeignet sind lineare aliphatische, verzweigte aliphatische, aliphatisch-aromatische und aromatische Aminocarbonsäuren. Beispielhaft genannt seien Aminocarbonsäuren mit einer primären oder sekundären Aminogruppe, wie Alanin, 6-Aminohexansäure, Aminoundecansäure, 8-Aminooctansäure, 5-Aminopentansäure, 4-Aminobuttersäure, Aminobenzoesäure, 4-Amino-methylcyclohexancarbonsäure, 2-Aminohexansäure, 4-Aminocyclohexan-carbon-säure, 12-Aminododecansäure und/oder 9-Aminononacarbonsäure.

Weiterhin zum Einbau von Carboxylgruppen als Komponenten (d) geeignet sind beispielsweise Diaminocarbonsäuren, die jeweils über 2 isocyanatreaktive Aminogruppen verfügen und somit bei der Herstellung der erfindungsgemäßen Polyurethane durch Umsetzung mit der Isocyanatkomponente zu seitenständigen, d.h. lateralen, Carboxylgruppen führen. Beispiele dafür sind Lysin, Arginin und/oder Histidin.

Zum Einbau von Carboxylgruppen als Komponenten (e) geeignet sind beispielsweise Hydroxycarbonsäuren, die jeweils nur eine Hydroxylgruppe enthalten, beispielsweise Hydroxypivalinsäure, Hydroxyessigsäure und/oder 2-Hydroxpropansäure.

Zur Herstellung der erfindungsgemäßen wässrigen Dispersionen können sämtliche, aus dem Stand der Technik bekannten Verfahren wie Emulgator-Scherkraft-, Aceton-, Prepolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der organischen Chemie (Houben-Weyl, Erweiterungs- und Folgebände zur 4. Auflage, Band E20, H. Bartl und J. Falbe, Stuttgart, New York, Thieme 1987, Seiten 1671 bis 1682. Erfindungsgemäß bevorzugt sind das Schmelz-Emulgier-, Prepolymer-Misch- und das Aceton-Verfahren. Besonders bevorzugt ist das Aceton-Verfahren. Die Anwendung und Durchführung des Aceton-Verfahrens ist Stand der Technik und dem Fachmann beispielsweise aus der EP-A 0 232 778 bekannt.

Das mindestens eine Polyurethan kann in der erfindungsgemäßen wässrigen Dispersion im Allgemeinen in jeder dem Fachmann als geeignet erscheinenden Konzentration vorliegen. Bevorzugt liegt das mindestens eine Polyurethan in der erfindungsgemäßen wässrigen Dispersion in einer Menge von 5 bis 64 Gew.-%, besonders bevorzugt 30 bis 60 Gew.-%, ganz besonders bevorzugt 40 bis 50 Gew.-, jeweils bezogen auf die gesamte wässrige Dispersion, vor.

Die erfindungsgemäße wässrige Dispersion enthält mindestens eine Verbindung mit biozider Wirkung. Im Rahmen der vorliegenden Erfindung bedeutet "mit biozider Wirkung", dass die entsprechende Verbindung Mikroorganismen, insbesondere Bakterien und/oder Pilze, bekämpfen, deren Vermehrung verhindern bzw. diese töten kann.

Die in der erfindungsgemäß eingesetzten wässrigen Dispersion vorliegende mindestens eine Verbindung mit biozider Wirkung enthält mindestens eine, bevorzugt eine, Peroxid-Gruppe. Die Peroxid-Gruppe ist dem Fachmann an sich bekannt und entspricht der Formel -O-O-.

Im Allgemeinen können erfindungsgemäß alle dem Fachmann bekannten bioziden Verbindungen mit mindestens einer Peroxid-Gruppe, bevorzugt anorganische Verbindungen mit mindestens einer Peroxid-Gruppe, eingesetzt werden. Bevorzugt wird erfindungsgemäß mindestens eine biozide Verbindung mit mindestens einer Peroxid-Gruppe ausgewählt aus der Gruppe bestehend aus Wasserstoffperoxid, Alkali- und Erdalkaliperoxide, insbesondere Natriumhyperoxid, Peroxomonoschwefelsäure, Peroxodischwefelsäure, Peressigsäure, Natriumpercarbonat und Mischungen davon. Ganz besonders bevorzugt wird erfindungsgemäß Wasserstoffperoxid, insbesondere eine wässrige Lösung von Wasserstoffperoxid, eingesetzt.

Die mindestens eine Verbindung mit biozider Wirkung enthaltend mindestens eine Peroxid-Gruppe tragende Verbindung liegt in der erfindungsgemäßen wässrigen Dispersion in einer Menge von 0,01 bis 1000 mmol/kg, bevorzugt 0,01 bis 500 mmol/kg, besonders bevorzugt 0,1 bis 100 mmol/kg, ganz besonders bevorzugt 1 bis 50 mmol/kg, jeweils bezogen auf die gesamte wässrige Dispersion, vor.

Neben dem mindestens einen Polyurethan und der mindestens einen bioziden Verbindung kann in der erfindungsgemäßen wässrigen Dispersion jedwede dem Fachmann als geeignet erscheinende Komponente vorliegen. Beispiele für zusätzlich vorliegende Komponenten sind in der Beschichtungs- und Klebstofftechnologie bekannte Bindemittel, Hilfs- und Zugschlagstoffe, insbesondere Emulgatoren und Lichtschutzmittel, insbesondere UV-Absorber, weiterhin Füllstoffe und Hilfsmittel, insbesondere Antiabsetzmittel, Entschäumungs- und/oder Netzmittel, Verlaufsmittel, Reaktiv-Verdünner, Weichmacher, Neutralisationsmittel, Katalysatoren, Hilfslösemittel, Verdicker, Additive, insbesondere Pigmente, Farbstoffe oder Mattierungsmittel, Klebrigmacher, so genannte Tacktifier, oder Mischungen davon.

Die vorliegende Erfindung betrifft daher bevorzugt die erfindungsgemäße wässrige Dispersion, wobei zusätzlich Komponenten ausgewählt aus Bindemitteln, Hilfs- und Zugschlagstoffen, Füllstoffe, Hilfsmittel, Verlaufsmittel, Reaktiv-Verdünner, Weichmacher, Neutralisationsmittel, Katalysatoren, Hilfslösemittel, Verdicker, Additive, Klebrigmacher und Mischungen davon vorliegen

Der Vorteil der erfindungsgemäßen wässrigen Dispersion besteht unter anderem darin, dass sie aufgrund des Vorliegens der mindestens einen bioziden Verbindung über einen Zeitraum von mindestens 6 Monaten keimfrei bleibt, sofern sie in einem original verschlossenen Gebinde vorliegt. Des Weiteren kann die erfindungsgemäße wässrige Dispersion vor der weiteren Verarbeitung einfach und effizient von der mindestens einen bioziden Verbindung befreit werden, so dass diese die weitere Verarbeitung nicht stört.

Die vorliegende Erfindung betrifft daher des Weiteren auch das Verfahren zur Herstellung einer biozidfreien wässrigen Polyurethan-Dispersion, umfassend mindestens die Schritte
(A) Bereitstellen einer wässrigen Dispersion enthaltend mindestens ein Polyurethan und mindestens eine Verbindung mit biozider Wirkung, wobei die mindestens eine Verbindung mit biozider Wirkung mindestens eine Peroxid-Gruppe enthält und in einer Menge von 0,01 bis 1000 mmol/kg, bezogen auf die gesamte wässrige Dispersion, vorliegt, und
(B) Behandeln der wässrigen Dispersion aus Schritt (A) mit mindestens einer antioxidativ wirkenden Verbindung, um die biozidfreie wässrige Polyurethan-Dispersion zu erhalten.

Die einzelnen Schritte des erfindungsgemäßen Verfahrens werden im Folgenden detailliert beschrieben.

Schritt (A) des erfindungsgemäßen Verfahrens umfasst das Bereitstellen einer wässrigen Dispersion enthaltend mindestens ein Polyurethan und mindestens eine Verbindung mit biozider Wirkung, wobei die mindestens eine Verbindung mit biozider Wirkung mindestens eine Peroxid-Gruppe enthält und in einer Menge von 0,01 bis 1000 mmol/kg, bezogen auf die gesamte wässrige Dispersion, vorliegt.

Details und bevorzugte Ausführungsformen der in Schritt (A) des erfindungsgemäßen Verfahrens bereitgestellten wässrigen Dispersion werden weiter oben bereits beschrieben und gelten für das erfindungsgemäße Verfahren entsprechend.

"Bereitstellen" bedeutet im Rahmen der vorliegenden Erfindung, dass die wässrige Dispersion in jeder dem Fachmann als geeignet erscheinenden Form vorliegenden kann, in der es möglich ist, gemäß Schritt (B) des erfindungsgemäßen Verfahrens behandelt zu werden. Bevorzugt wird die wässrige Dispersion in einem Behälter oder Reaktor, beispielsweise einem Rührreaktor, bereitgestellt. Der Zusatz der mindestens einen antioxidativ wirkenden Verbindung kann des Weiteren auch nach Umfüllen der wässrigen Dispersion in einen Mischbehälter, insbesondere ausgerüstet mit Rührer oder Umwälzpumpe, erfolgen. Der Zusatz der mindestens einen antioxidativ wirkenden Verbindung kann auch direkt in die Liefergebinde erfolgen.

Erfindungsgemäß weist die wässrige Dispersion die weiter oben beschriebenen Konzentrationen an Inhaltsstoffen auf. Es ist erfindungsgemäß aber auch möglich, dass die wässrige Dispersion vor Schritt (A) verdünnt oder aufkonzentriert wird. Geeignete Konzentrationen des vorliegenden mindestens einen Polyurethans sind hierbei 10 bis 64 Gew.-%, bevorzugt 30 bis 60 Gew.-%, ganz besonders bevorzugt 40 bis 50 Gew.-%, jeweils bezogen auf die gesamte wässrige Dispersion.

Erfindungsgemäß kann die wässrige Dispersion vor Schritt (B) des erfindungsgemäßen Verfahrens mit mindestens einer weiteren wässrigen Polymerdispersion, beispielweise mit einer wässrigen Dispersion mindestens eines Polyolefins oder mindestens einen Polyacrylates, vermischt werden.

Schritt (B) des erfindungsgemäßen Verfahrens umfasst das Behandeln der wässrigen Dispersion aus Schritt (A) mit mindestens einer antioxidativ wirkenden Verbindung, um die biozidfreie wässrige Polyurethan-Dispersion zu erhalten.

Im Prinzip kann in Schritt (B) des erfindungsgemäßen Verfahrens jede dem Fachmann bekannte antioxidativ wirkende Verbindung oder Mischung davon eingesetzt werden, die ein genügend hohes Redoxpotential besitzt, um die vorhandene Peroxid-Gruppe zu reduzieren. Erfindungsgemäß bevorzugt ist die mindestens eine antioxidativ wirkende Verbindung ausgewählt aus der Gruppe der natürlich vorkommenden antioxidativ wirkenden Verbindungen, besonders bevorzugt ausgewählt aus der Gruppe bestehend aus Ascorbinsäure, Salzen der Ascorbinsäure, Cystein, Acetylcystein, L-Glutathion, Methionin und Mischungen davon. Ganz besonders bevorzugt werden erfindungsgemäß Alkalisalze der Ascorbinsäure, bevorzugt Na-Ascorbat, als antioxidativ wirkende Verbindungen verwendet.

Erfindungsgemäß kann die mindestens eine antioxidativ wirkende Verbindung in jeder für den Fachmann geeigneten Menge eingesetzt werden. Bevorzugt wird die mindestens eine antioxidativ wirkende Verbindung in einem Molverhältnis Peroxid (-O-O-) zu Antioxidans von 0,1 bis 10, besonders bevorzugt 1 bis 3, ganz besonders bevorzugt 1,8 bis 2,2, zugegeben.

Schritt (B) des erfindungsgemäßen Verfahrens kann im Allgemeinen bei jeder dem Fachmann als geeignet erscheinenden Temperatur erfolgen, bevorzugt bei 5 bis 100 °C, besonders bevorzugt bei 23 bis 50 °C.

Schritt (B) des erfindungsgemäßen Verfahrens kann im Allgemeinen bei jedem dem Fachmann als geeignet erscheinenden Druck erfolgen, bevorzugt bei Atmosphärendruck.

In Schritt (B) kann die wässrige Dispersion bevorzugt gerührt werden, insbesondere durch dem Fachmann bekannte Vorrichtungen, insbesondere Propellerrührer, Ankerrührer, Dissolverscheibe, Wendelrührer, Jetrührer, beispielsweise Visco-Jet®. Das Vermischen und/oder Lösen in Schritt (B) des erfindungsgemäßen Verfahrens kann auch durch Umpumpen der wässrigen Dispersion (A) mit beispielsweise Schlauchpumpen, Membranpumpen, Exzenterschneckenpumpen erfolgen.

Die Zugabe der mindestens einen antioxidativ wirkenden Verbindung kann im Allgemeinen in jeder dem Fachmann als geeignet erscheinenden Form erfolgen, beispielsweise als Feststoff, als Suspension oder in Form einer Lösung. Bevorzugt ist die Zugabe einer wässrigen Lösung der mindestens einen antioxidativ wirkenden Verbindung zu der wässrigen Dispersion.

Wird erfindungsgemäß die mindestens eine antioxidativ wirkende Verbindung als wässrige Lösung zugegeben, so weist diese im Allgemeinen eine Konzentration von 0,1 bis 1000 g/l, bevorzugt 100 bis 1000 g/l, auf.

In Schritt (B) des erfindungsgemäßen Verfahrens reagiert die zugegebene mindestens eine antioxidativ wirkende Verbindung mit der in der wässrigen Dispersion vorliegenden mindestens einen Verbindung mit biozider Wirkung, so dass diese zersetzt wird. Erfindungsgemäß wird bevorzugt die gesamte vorliegende mindestens eine Verbindung mit biozider Wirkung entsprechend umgesetzt. Nach Schritt (B) des erfindungsgemäßen Verfahrens beträgt die Konzentration an mindestens einer Verbindung mit biozider Wirkung enthaltend mindestens eine Peroxid-Gruppe daher bevorzugt weniger als 10 mg/l, besonders bevorzugt 0,5 bis 10 mg/l, ganz besonders bevorzugt 0,5 bis 2 mg/l.

Nach Schritt (B) des erfindungsgemäßen Verfahrens wird bevorzugt eine wässrige polyurethanhaltige Dispersion erhalten, die weitgehend frei von Verbindungen mit biozider Wirkung ist und daher direkt weiterverarbeitet werden kann, insbesondere in den erfindungsgemäßen Schritt (C) eingesetzt werden kann. Im Rahmen der vorliegenden Erfindung bedeutet "weitgehend frei" bevorzugt, dass die mindestens eine Verbindung mit biozider Wirkung höchstens in den im vorhergehenden Abschnitt genannten Konzentrationen vorliegt.

Es ist erfindungsgemäß aber auch möglich, dass die in Schritt (B) erhaltene wässrige Dispersion weiteren Aufarbeitungsschritten zugeführt wird, beispielsweise dem Zusatz von Bioziden, die für die weitere Verarbeitung geeignet sind. Des Weiteren können Verdicker, Pigmente, Farbpasten, weitere Verarbeitungshilfsmittel, beispielsweise Entschäumer, Benetzungshilfsmittel, Koagulationshilfsmittel und/oder Stabilisatoren, beispielsweise weitere Antioxidantien, UV-Stabilisatoren, zugesetzt werden. Verfahren zum Zusatz der genannten Komponenten sind dem Fachmann an sich bekannt.

Erfindungsgemäß bevorzugt betrifft die vorliegende Erfindung das erfindungsgemäße Verfahren, wobei nach Schritt (B) mindestens der folgende Schritt (C) durchgeführt wird:
(C) Herstellung von Artikeln, Kosmetika, Beschichtungen, Klebstoffschichten oder Klebstoffen aus der in Schritt (B) erhaltenen biozidfreien, wässrigen Polyurethan-Dispersion.

Entsprechende Verfahren, die in Schritt (C) des erfindungsgemäßen Verfahrens erfolgen, sind dem Fachmann an sich bekannt, beispielsweise
- Tauchbeschichtung, insbesondere zur Herstellung von Handschuhen, bevorzugt zur Verwendung im Medizinbereich,
- Herstellung von wässrigen Klebstoffdispersionen, die mit und ohne Vernetzer, beispielsweise Isocyanat- oder Polycarbodiimid-Vernetzer, verarbeitet werden,
- Herstellung von latent-reaktiven Klebstoffschichten, Klebstofffilmen oder Klebstoffpulvern, beispielsweise beschrieben in EP-A 0 922 720 oder EP 2 099 840 B1,
- Beschichtung von Textilien, Leder oder Kunstleder,
- Verwendung von Polyurethandispersion in Haarspray, Sonnenschutzmitteln etc.,
- Beschichtungen auf Kunststoffen, metallischen Werkstoffen, Holz,

Erfindungsgemäß bevorzugte Artikel sind beispielsweise ausgewählt aus durch Tauchbeschichtung (Dip Coating) hergestellten Artikeln, beispielsweise Einmal-Handschuhe oder Kondome, Abdeckungen oder sogenannte Sleeves für medizinische Geräte, Sonden, Endoskope, beschichtete Textilien, Bandagen, Filme für Wundauflagen, medizinische Schäume oder sogenannte Wearable Patches.

Erfindungsgemäß bevorzugte Kosmetika sind beispielsweise ausgewählt aus Haarspray, Sonnenschutzcreme, Conditioner oder Mascara etc., weiter bevorzugt dient das eingesetzte mindestens eine Polyurethan hierbei als Filmbildner.

Erfindungsgemäß bevorzugte Beschichtungen sind beispielsweise ausgewählt aus Primer-, Füller-, Basislack- und Decklack-Systemen, Beschichtungen von Holz, Metall, und Kunststoffen, Textilien, Leder, Kunstleder, jeweils in verschiedenen Industrien, beispielsweise bei Autos, Großfahrzeugen, ACE (Agricultural, Construction & Earth Moving Equipment), Industrielackierungen, Möbeln oder Glasfaserschlichten.

Erfindungsgemäß bevorzugte Klebstoffe sind beispielsweise ausgewählt aus Polyurethandispersionsklebstoffen,, die sowohl als 1- oder 2-Komponenten-System verarbeitet werden, nicht-reaktive und reaktive Klebstofffilme, Klebstoffpulver oder Klebstoffschichten, jeweils aufgetragen auf Substratoberflächen.

Die vorliegende Erfindung betrifft des Weiteren auch die Verwendung mindestens einer antioxidativ wirkenden Verbindung zur Behandlung einer wässrigen Dispersion enthaltend mindestens ein Polyurethan und mindestens eine Verbindung mit biozider Wirkung, wobei die mindestens eine Verbindung mit biozider Wirkung mindestens eine Peroxid-Gruppe enthält und in einer Menge von 0,01 bis 1000 mmol/kg, bezogen auf die gesamte wässrige Dispersion, vorliegt.

Details und bevorzugte Ausführungsformen der erfindungsgemäßen Verwendung sind bereits bezüglich der erfindungsgemäßen wässrigen Dispersion und bezüglich des erfindungsgemäßen Verfahrens genannt und gelten hier entsprechend.

Die vorliegende Erfindung wird anhand von Beispielen erläutert.

### Beispiele:

### Einsatzstoffe und Quellen

| | |
|---|---|
| Polyester I: | Polyesterdiol aus 1,4-Butandiol und Adipinsäure, OH-Zahl 50 |
| Desmodur® H: | Hexamethylendiisocyanat-1,6, Covestro Deutschland AG |
| Desmodur® I: | Isophorondiisocyanat, Covestro Deutschland AG |
| Desmodur® W: | 4,4'-Diisocyanatodicyclohexylmethan, Covestro Deutschland AG |
| PolyTHF® 1000: | BASF SE |
| PolyTHF® 2000: | BASF SE |
| Desmodur® DN: | Hydrophil modifiziertes Polyisocyanate auf Basis Hexamethylendiisocyanat, NCO-Gehalt 20 Gew.-%, Covestro Deutschland AG |
| Preventol® D7: | 1,5 gew.-%ige wässrige Lösung eines Gemischs aus 5-Chlor-2-methylisothiazolinon / 2-Methylisothiazolinon (CAS 55965-84-9), Lanxess Deutschland AG |
| Wasserstoffperoxid: | 35 gew.-%ige wässrige Lösung, Merck KGaA |
| Ascorbinsäure: | Merck KGaA |
| Natriumascorbat: | Merck KGaA |
| Cystein: | Merck KGaA |
| Acetylcystein: | Merck KGaA |
| L-Glutathion: | Merck KGaA |
| Methionin: | Merck KGaA |

### Methoden:

Die Peroxid-Konzentration in mmol/l in den Polyurethan-Polyharnstoff-Dispersionen bezieht sich, wenn nicht anders angegeben, immer auf die Peroxid-Gruppe -O-O- mit dem Molekulargewicht 32 g/mol.

### Bestimmung der Peroxid-Konzentration:

Die Bestimmung der Peroxid-Konzentration bzw. das Vorhandensein von oxidativ wirkendem Biozid in der Polyurethan-Polyharnstoff-Dispersion erfolgte halbquantitativ mit den im folgenden genannten Peroxid-Teststreifen:
Peroxid-Test 100 bis 1000 mg/l H₂O₂, MQuant, Merck KGaA
QUANTOFIX® Peroxid 25, 0 bis 25 mg/l H₂O₂, Macherey-Nagel

Der Peroxid-Test 100 bis 1000 mg/H₂O₂ der Fa. MQuant wurde im Folgenden nur für die halbquantitative Bestimmung der Peroxid-Konzentration in den Polyurethan-Polyharnstoff-Dispersionen vor Zusatz der Reduktionsmittel (Additive) eingesetzt.

QUANTOFIX® Peroxid 25 eignet sich auch zum Nachweis von Peressigsäure und anderen organischen und freien anorganischen Hydroperoxiden und wurde daher zur Bestimmung der Peroxid-Konzentration in den Polyurethan-Polyharnstoff-Dispersionen nach Zusatz der Reduktionsmittel (Additive) eingesetzt.

### Bestimmung des bakteriologischen Status der Polyurethan-Polyharnstoff-Dispersionen:

Die Bestimmung der Kontamination bzw. des Bakterienwachstums in den Polyurethan-Polyharnstoff-Dispersionen erfolgte mit dem BacTrac 4300 der Fa. SY-LAB Geräte GmbH. Dazu wurde 1 ml der Polyurethan-Polyharnstoff-Dispersion in die Messzelle BiMedia 001C (Bestellnummer 41-440011) eingefüllt. Die Messzelle wurde mit der Schraubkappe (Bestellnummer 41-440012+) verschlossen und in den auf 35 °C temperierten Messplatz des BacTrac 4300 eingestellt.

Die Vermehrung der Mikroorganismen in der Dispersionsprobe geht mit der Zunahme der Stoffwechselprodukte einher. Als Maß für die Bestimmung der Stoffwechselprodukte nutzt das Messgerät BacTrac 4300 den Wechselstromwiderstand (Impedanz) der Probe. Der Schwellenwert (E) kann individuell festgelegt werden. Bei Überschreiten des Schwellenwertes (E) wird die Probe als nicht keimfrei erachtet. Für alle Messungen wurde der Schwellenwert (E) mit dem Wert 8 und die max. Messdauer mit 50 h festgelegt. Die Temperatur der Probe lag während der Messung bei 35 °C. Die Angaben in Tabelle 1 beziehen sich auf die Zeit [h] bis zum Erreichen des Schwellenwerts (E).

### Biozide Wirkung (BacTrac-Test):

Die mit Bakterien kontaminierte Polyurethan-Polyharnstoff-Dispersion 1 (PUD 1) wurde mit Preventol D7 (Vergleichsbeispiel) sowie mit Wasserstoffperoxid als Biozide versetzt. Unmittelbar nach dem Zusatz der Biozide wurde die Bestimmung des bakteriologischen Status der Polyurethan-Polyharnstoff-Dispersionen mittels des BacTrac 4300 gestartet.

### Polyurethan-Polyharnstoff-Dispersion 1 (PUD 1):

450 g Polyester I wurden 1 Stunde bei 110 °C und 15 mbar entwässert. Bei 80 °C wurden 30,11 g Desmodur® H und anschließend 20,14 g Desmodur® I zugegeben. Die Mischung wurde bei 80 bis 90 °C gerührt, bis ein konstanter Isocyanatgehalt von 1,15 Gew.-% erreicht war. Das Reaktionsgemisch wurde in 750 g Aceton gelöst und dabei auf 48 °C abgekühlt. In die homogene Lösung wurde eine Lösung aus 5,95 g Natriumsalz der N-(2-Aminoethyl)-2-aminoethansulfonsäure und 2,57 g Diethanolamin in 65 g Wasser unter kräftigem Rühren gegeben. Nach 30 Minuten wurde durch Zugabe von 700 g Wasser dispergiert. Nach destillativer Abtrennung des Acetons wurde eine wässrige Polyurethan-Polyharnstoff-Dispersion mit einen Feststoffgehalt von 40,0 Gew.-% erhalten. Das enthaltene Polymer war nach der Trocknung teilkristallin mit einer Schmelztemperatur von 48 °C und einer Schmelzenthalpie von 50,4 J/g.

### Polyurethan- Polyharnstoff-Dispersion 2 (PUD 2):

318,8 g Polyester aus Adipinsäure, Hexandiol und Neopentylglykol mit einem zahlenmittleren Molekulargewicht von 1700 g/mol wurden auf 65 °C erhitzt. Dann wurden 87,9 g Desmodur® W zugegeben und die Mischung bei 125 °C gerührt, bis der tatsächliche NCO-Wert unter den theoretischen NCO-Wert gefallen war. Das molare Verhältnis der Isocyanatgruppen zu den Hydroxylgruppen in der Präpolymerbildungsstufe betrug 1,79. Das Prepolymer wurde in 720 g Aceton bei 50 °C gelöst, und dann wurde eine Lösung aus 33,9 g Diaminosulfonat, 1,6 g Ethylendiamin und 102 g Wasser zudosiert. Die Nachrührzeit betrug 15 Minuten. Die Mischung wurde durch Zugabe von 515 g Wasser dispergiert. Das Aceton wurde durch Destillation im Vakuum entfernt. Es wurde eine lagerstabile Dispersion erhalten, deren Feststoffgehalt durch Zugabe von Wasser auf etwa 40 Gew.-% eingestellt wurde.

### Polyurethan- Polyharnstoff-Dispersion 3 (PUD 3):

1077,2 g PolyTHF® 2000, 409,7 g PolyTHF® 1000, 830,9 g Desmophen® C2202 und 48,3 g Polyether LB 25 wurden in einer Standard-Rührapparatur auf 70 °C aufgeheizt. Anschließend wurde bei 70 °C innerhalb von 5 min ein Gemisch aus 258,7 g Desmodur H und 341,9 g Desmodur I zugegeben und bei 120 °C gerührt, bis der theoretische NCO-Wert erreicht oder leicht unterschritten war. Das fertige Prepolymer wurde mit 4840 g Aceton gelöst und dabei auf 50 °C abgekühlt und anschließend wurde eine Lösung aus 27,4 g Ethylendiamin, 127,1 g Isophorondiamin, 67,3 g Diaminosulfonat und 1200 g Wasser innerhalb von 10 min zudosiert. Die Nachrührzeit betrug 10 min. Dann wurde durch Zugabe von 654 g Wasser dispergiert. Es folgte die Entfernung des Lösemittels durch Destillation im Vakuum. Die erhaltene Polyurethan-Dispersion hatte einen Feststoffgehalt von 61,6 Gew.-%.

Die Ergebnisse der Tests der Biozid-Wirkungen der einzelnen eingesetzten Biozide sind in der folgenden Tabelle 1 dargestellt:

**Tabelle 1:**

| | | | Lagerung für | | |
|---|---|---|---|---|---|
| Nr. | Beschreibung | 30 min nach Zugabe | 1 Woche | 1 Monat | 2 Monate |
| V1 | 100 g PUD 1 (ohne Biozid) | 16,8* | 16,1 | 17,45 | 17,4 |
| V2 | 100 g PUD 1 + 0,1 g Preventol D7 | 19,3 | keimfrei | keimfrei | keimfrei |
| 3 | 100 g PUD 1 + 0,06 g Wasserstoffperoxid (35 gew.-%ig) | 36,2 | keimfrei | keimfrei | keimfrei |
| 4 | 100 g PUD 1 + 0,14 g Wasserstoffperoxid (35 gew.-%ig) | keimfrei | keimfrei | keimfrei | keimfrei |
| 5 | 100 g PUD 1 + 0,29 g Wasserstoffperoxid (35 gew.-%ig) | keimfrei | keimfrei | keimfrei | keimfrei |

| | | | | | |
|---|---|---|---|---|---|
| * Messung startete sofort. In den Versuchen, in denen ein Biozid (Preventol D7 oder Wasserstoffperoxid) zugegeben wurde, startete die erste Messung jeweils 30 min nach der Zugabe. "Keimfrei" bedeutet, dass innerhalb von 50 h der Schwellenwert (E) im Bac-Trac Test nicht überschritten wird. Die Zahlenwerte in Tabelle 1 stehen für die Zeit [h] bis zum Erreichen des Schwellenwerts (E). | | | | | |

Die bakterizide Wirkung von Wasserstoffperoxid ist offensichtlich. Unmittelbar nach Zusatz von 0,14 g Wasserstoffperoxid (35 gew.-%ig) (entspricht 14,4 mmol H₂O₂/kg) zu der PUD 1 ist die Dispersion keimfrei. Nach Zusatz von 0,1 Gew.-% Preventol D 7 wird die Keimfreiheit erst nach 1 Woche erreicht.

### Abnahme der Peroxid-Konzentration durch Zusatz der erfindungsgemäßen Additive:

Den Polyurethan-Polyharnstoff-Dispersionen 1 bis 3 (PUD 1 bis 3) wurden 340 ppm (= 10 mmol/kg), 680 ppm (= 20 mmol/kg) bzw. 3400 ppm (= 100 mmol/kg) H₂O₂ zugesetzt. Die Bestimmung der H₂O₂-Konzentration der so behandelten Dispersionen erfolgte halbquantitativ mit dem Peroxid-Test 100 bis 1000 mg/l H₂O₂, MQuant, Merck KGaA.

Die Teststreifen wurden dazu jeweils 1 Sekunde in die zu messende Polyurethan-Polyharnstoff-Dispersion eingetaucht. Nach Entnahme der Teststreifen aus der Dispersion wurden die Teststreifen sofort mit ca. 5 ml destilliertem Wasser abgespült. Nach weiteren 30 Sekunden wurde die Konzentration (ppm H₂O₂/l) durch Vergleich der Indikatorfläche auf dem Teststreifen mit der Vergleichsskala ermittelt. Die Messergebnisse sind in Tabelle 2 dargestellt. Dabei entsprechen die eingetragenen Verhältnisse dem molaren Verhältnis Additiv zu H₂O₂.

**Tabelle 2: 10 mmol H₂O₂, entsprechend 0,97 g H₂O₂ (35 gew.-%ig in Wasser)/kg Dispersion PUD 1, entspricht rechnerisch 340 ppm H₂O₂, Messergebnis 400 ppm H₂O₂, jeweils vor Zugabe des Additivs**

| | | | | gemessene Konzentration H₂O₂ [ppm] | | | | |
|---|---|---|---|---|---|---|---|---|
| Nr. | Additiv | Menge an Additiv [g] | molares Verhältnis Additiv: H₂O₂ | direkt nach Zugabe des Additivs | 1 Tag nach Zugabe des Additivs | 3 Tage nach Zugabe des Additivs | 1 Woche nach Zugabe des Additivs | 2 Wochen nach Zugabe des Additivs |
| 6.1 | Ascorbinsäure | 0,88 | 0,5:1 | 2 bis 5 | 2 bis 5 | 2 bis 5 | 2 bis 5 | 10 |
| 6.2 | Ascorbinsäure | 1,76 | 1:1 | 2 bis 5 | 2 bis 5 | 2 | ≤ 0,5 | ≤ 0,5 |
| 6.3 | Ascorbinsäure | 3,52 | 2:1 | < 2 | ≤ 0,5 | ≤ 0,5 | ≤ 0,5 | ≤ 0,5 |
| 7.1 | Na-Ascorbat | 0,95 | 0,5:1 | 2 | 2 | 2 | 2 | 10 |
| 7.2 | Na-Ascorbat | 1,89 | 1:1 | 2 | 2 | 0,5 bis 2 | ≤ 0,5 | ≤ 0,5 |
| 7.3 | Na-Ascorbat | 3,78 | 2:1 | < 2 | ≤ 0,5 | ≤ 0,5 | ≤ 0,5 | ≤ 0,5 |
| 8.1 | Cystein | 0,61 | 0,5:1 | 10 | 10 | 10 | 10 | 10 |
| 8.2 | Cystein | 1,21 | 1:1 | 10 | 10 | 10 | 10 | 10 |
| 8.3 | Cystein | 2,42 | 2:1 | 10 | 10 | 10 | 10 | 10 |
| 9.1 | Acetylcystein | 0,82 | 0,5:1 | 10 | 5 | 5 | 5 | 10 |
| 9.2 | Acetylcystein | 1,63 | 1:1 | 10 | 5 | 5 | 5 | 10 |
| 9.2 | Acetylcystein | 3,26 | 2:1 | 10 | 5 | 5 | 5 | 2 |
| 10.1 | L-Glutathion | 1,54 | 0,5:1 | 10 | 10 | 10 | 10 | 10 |
| 10.2 | L-Glutathion | 3,07 | 1:1 | 10 | 10 | 10 | 10 | 10 |
| 10.3 | L-Glutathion | 6,14 | 2:1 | 10 | 10 | 10 | 10 | 10 |
| 11.1 | Methionin | 0,75 | 0,5:1 | 10 | 10 | 10 | 10 | 10 |
| 11.2 | Methionin | 1,49 | 1:1 | 10 | 10 | 10 | 10 | 10 |
| 11.3 | Methionin | 2,98 | 2:1 | 10 | ≤0,5 | ≤0,5 | ≤0,5 | ≤0,5 |

**Tabelle 3: 20 mmol H₂O₂, entsprechend 1,94 g H₂O₂ (35 gew.-%ig in Wasser)/kg Dispersion PUD 1, entspricht rechnerisch 680 ppm H₂O₂, Messergebnis 800 ppm H₂O₂, jeweils vor Zugabe des Additivs**

| | | | | gemessene Konzentration H₂O₂ [ppm] | | | | |
|---|---|---|---|---|---|---|---|---|
| Nr. | Additiv | Menge an Additiv [g] | molares Verhältnis Additiv : H₂O₂ | direkt nach Zugabe des Additivs | 1 Tag nach Zugabe des Additivs | 3 Tage nach Zugabe des Additivs | 1 Woche nach Zugabe des Additivs | 2 Wochen nach Zugabe des Additivs |
| 12.1 | Ascorbinsäure | 0,88 | 0,5:1 | 2 bis 5 | 2 | 2 | 2 | 10 |
| 12.2 | Ascorbinsäure | 1,76 | 1:1 | 2 | 2 | < 0,5 | < 0,5 | < 0,5 |
| 12.3 | Ascorbinsäure | 3,52 | 2:1 | 2 | < 0,5 | < 0,5 | < 0,5 | < 0,5 |
| 13.1 | Na-Ascorbat | 0,95 | 0,5:1 | 2 | 2 | 2 | 5 | 10 |
| 13.2 | Na-Ascorbat | 1,89 | 1:1 | 2 | 2 | < 0,5 | < 0,5 | < 0,5 |
| 13.3 | Na-Ascorbat | 3,78 | 2:1 | < 2 | < 0,5 | < 0,5 | < 0,5 | < 0,5 |
| 14.1 | Cystein | 0,61 | 0,5:1 | 10 | 10 | 10 | 10 | 10 |
| 14.2 | Cystein | 1,21 | 1:1 | 10 | 10 | 10 | 10 | 10 |
| 14.3 | Cystein | 2,42 | 2:1 | 10 | 10 | 10 | 10 | 10 |
| 15.1 | Acetylcystein | 0,82 | 0,5:1 | 5 bis 10 | 5 | 5 | 5 | 5 |
| 15.2 | Acetylcystein | 1,63 | 1:1 | 5 bis 10 | 5 | 5 | 5 | 5 |
| 15.2 | Acetylcystein | 3,26 | 2:1 | 5 bis 10 | 5 | 5 | 5 | 5 |
| 16.2 | L-Glutathion | 1,54 | 0,5:1 | 10 | 10 | 10 | 5 | 10 |
| 16.2 | L-Glutathion | 3,07 | 1:1 | 10 | 10 | 10 | 5 | 10 |
| 16.3 | L-Glutathion | 6,14 | 2:1 | 10 | 10 | 10 | 5 | < 0,5 |
| 17.1 | Methionin | 0,75 | 0,5:1 | 10 | 10 | 10 | 10 | 10 |
| 17.2 | Methionin | 1,49 | 1:1 | 10 | 10 | 10 | 10 | 10 |
| 17.3 | Methionin | 2,98 | 2:1 | 10 | < 0,5 | < 0,5 | < 0,5 | < 0,5 |

**Tabelle 4: 100 mmol H₂O₂, entsprechend 9,71 g H₂O₂ (35 gew.-%ig in Wasser)/kg Dispersion PUD 1, entspricht rechnerisch 3400 ppm H₂O₂, Messergebnis > 1000 ppm H₂O₂, jeweils vor Zugabe des Additivs**

| | | | | gemessene Konzentration H₂O₂ [ppm] | | | | |
|---|---|---|---|---|---|---|---|---|
| Nr. | Additiv | Menge an Additiv [g] | molares Verhältnis Additiv : H₂O₂ | direkt nach Zugabe des Additivs | 1 Tag nach Zugabe des Additivs | 3 Tage nach Zugabe des Additivs | 1 Woche nach Zugabe des Additivs | 2 Wochen nach Zugabe des Additivs |
| 18.1 | Ascorbinsäure | 0,88 | 0,5:1 | < 0,5 | < 0,5 | < 0,5 | < 0,5 | 2 |
| 18.2 | Ascorbinsäure | 1,76 | 1:1 | < 0,5 | < 0,5 | < 0,5 | < 0,5 | < 0,5 |
| 18.3 | Ascorbinsäure | 3,52 | 2:1 | < 0,5 | < 0,5 | < 0,5 | < 0,5 | < 0,5 |
| 19.1 | Na-Ascorbat | 0,95 | 0,5:1 | < 0,5 | < 0,5 | < 0,5 | < 0,5 | 10 |
| 19.2 | Na-Ascorbat | 1,89 | 1:1 | < 0,5 | < 0,5 | < 0,5 | < 0,5 | < 0,5 |
| 19.3 | Na-Ascorbat | 3,78 | 2:1 | < 0,5 | < 0,5 | < 0,5 | < 0,5 | < 0,5 |
| 20.1 | Cystein | 0,61 | 0,5:1 | 5 | 5 | 5 | 10 | 5 |
| 20.1 | Cystein | 1,21 | 1:1 | 5 | 5 | 5 | 10 | 5 |
| 20.1 | Cystein | 2,42 | 2:1 | 5 | 5 | 5 | 10 | 25 |
| 21.1 | Acetylcystein | 0,82 | 0,5:1 | 5 | 2 bis 5 | 2 bis 5 | 5-10 | 5 |
| 21.1 | Acetylcystein | 1,63 | 1:1 | 5 | 2 bis 5 | 2 bis 5 | 5-10 | 5 |
| 21.1 | Acetylcystein | 3,26 | 2:1 | 5 | 2 bis 5 | 2 bis 5 | 10 | 0,5-2 |
| 22.1 | L-Glutathion | 1,54 | 0,5:1 | 5-10 | 5 bis 10 | 5 bis 10 | 10 | 5 |
| 22.2 | L-Glutathion | 3,07 | 1:1 | 5-10 | 5 bis 10 | 5 bis 10 | 10 | 5 |
| 22.3 | L-Glutathion | 6,14 | 2:1 | 5-10 | 5 bis 10 | 5 bis 10 | 10 | < 0,5 |
| 23.1 | Methionin | 0,75 | 0,5:1 | 10 | 5 bis 10 | 10 | 10 | 10 |
| 23.2 | Methionin | 1,49 | 1:1 | 10 | 5 bis 10 | 10 | 10 | 10 |
| 23.3 | Methionin | 2,98 | 2:1 | 10 | < 0,5 | < 0,5 | < 0,5 | < 0,5 |

**Tabelle 5: 10 mmol H₂O₂, entsprechend 0,97 g H₂O₂ (35 gew.-%ig in Wasser)/kg Dispersion PUD 2, entspricht rechnerisch 340 ppm H₂O₂, Messergebnis 400 ppm H₂O₂, jeweils vor Zugabe des Additivs**

| | | | | gemessene Konzentration H₂O₂ [ppm] | | | | |
|---|---|---|---|---|---|---|---|---|
| Nr. | Additiv | Menge an Additiv [g] | molares Verhältnis Additiv : H₂O₂ | direkt nach Zugabe des Additivs | 1 Tag nach Zugabe des Additivs | 3 Tage nach Zugabe des Additivs | 1 Woche nach Zugabe des Additivs | 2 Wochen nach Zugabe des Additivs |
| 24.1 | Na-Ascorbat | 0,95 | 0,5:1 | 2 | 2 | < 0,5 | < 0,5 | < 0,5 |
| 24.2 | Na-Ascorbat | 1,89 | 1:1 | 2 | < 0,5 | < 0,5 | < 0,5 | < 0,5 |
| 24.3 | Na-Ascorbat | 3,78 | 2:1 | 2 | < 0,5 | < 0,5 | < 0,5 | < 0,5 |

**Tabelle 6: 20 mmol H₂O₂, entsprechend 1,94 g H₂O₂ (35 gew.-%ig in Wasser)/kg Dispersion PUD 2, entspricht rechnerisch 680 ppm H₂O₂, Messergebnis 800 ppm H₂O₂, jeweils vor Zugabe des Additivs**

| | | | | gemessene Konzentration H₂O₂ [ppm] | | | | |
|---|---|---|---|---|---|---|---|---|
| Nr. | Additiv | Menge an Additiv [g] | molares Verhältnis Additiv : H₂O₂ | direkt nach Zugabe des Additivs | 1 Tag nach Zugabe des Additivs | 3 Tage nach Zugabe des Additivs | 1 Woche nach Zugabe des Additivs | 2 Wochen nach Zugabe des Additivs |
| 25.1 | Na-Ascorbat | 1,89 | 0,5:1 | 2 | 2 | 2 | 2 | 2 |
| 25.2 | Na-Ascorbat | 3,78 | 1:1 | 2 | < 0,5 | < 0,5 | < 0,5 | < 0,5 |
| 25.3 | Na-Ascorbat | 7,56 | 2:1 | 2 | < 0,5 | < 0,5 | < 0,5 | < 0,5 |

**Tabelle 7: 100 mmol H₂O₂, entsprechend 9,71 g H₂O₂ (35 gew.-%ig in Wasser)/kg Dispersion PUD 2, entspricht rechnerisch 3400 ppm H₂O₂, Messergebnis > 1000 ppm H₂O₂, jeweils vor Zugabe des Additivs**

| | | | | gemessene Konzentration H₂O₂ [ppm] | | | | |
|---|---|---|---|---|---|---|---|---|
| Nr. | Additiv | Menge an Additiv [g] | molares Verhältnis Additiv : H₂O₂ | direkt nach Zugabe des Additivs | 1 Tag nach Zugabe des Additivs | 3 Tage nach Zugabe des Additivs | 1 Woche nach Zugabe des Additivs | 2 Wochen nach Zugabe des Additivs |
| 26.1 | Na-Ascorbat | 9,45 | 0,5:1 | < 0,5 | < 0,5 | < 0,5 | 2 | 2 |
| 26.2 | | 18,9 | 1:1 | < 0,5 | < 0,5 | < 0,5 | < 0,5 | < 0,5 |
| 26.3 | | 37,8 | 2:1 | < 0,5 | < 0,5 | < 0,5 | < 0,5 | < 0,5 |

**Tabelle 8: 10 mmol H₂O₂, entsprechend 0,97 g H₂O₂ (35 gew.-%ig in Wasser)/kg Dispersion PUD 3, entspricht rechnerisch 340 ppm H₂O₂, Messergebnis 400 ppm H₂O₂, jeweils vor Zugabe des Additivs**

| | | | | gemessene Konzentration H₂O₂ [ppm] | | | | |
|---|---|---|---|---|---|---|---|---|
| Nr. | Additiv | Menge an Additiv [g] | molares Verhältnis Additiv : H₂O₂ | direkt nach Zugabe des Additivs | 1 Tag nach Zugabe des Additivs | 3 Tage direkt Zugabe des Additivs | 1 Woche nach Zugabe des Additivs | 2 Woche nach Zugabe des Additivs |
| 27.1 | Na-Ascorbat | 0,95 | 0,5:1 | 10 bis 25 | 10 bis 25 | 10 bis 25 | - | - |
| 27.2 | Na-Ascorbat | 1,89 | 1:1 | 5 bis 10 | < 0,5 | < 0,5 | - | - |
| 27.3 | Na-Ascorbat | 3,78 | 2:1 | 2 | < 0,5 | < 0,5 | - | - |

**Tabelle 9: 20 mmol H₂O₂, entsprechend 1,94 g H₂O₂ (35 gew.-%ig in Wasser)/kg Dispersion PUD 3, entspricht rechnerisch 680 ppm H₂O₂, Messergebnis 800 ppm H₂O₂, jeweils vor Zugabe des Additivs**

| | | | | gemessene Konzentration H₂O₂ [ppm] | | | | |
|---|---|---|---|---|---|---|---|---|
| Nr. | Additiv | Menge an Additiv [g] | molares Verhältnis Additiv : H₂O₂ | direkt nach Zugabe des Additivs | 1 Tag nach Zugabe des Additivs | 3 Tage direkt Zugabe des Additivs | 1 Woche nach Zugabe des Additivs | 2 Woche nach Zugabe des Additivs |
| 28.1 | Na-Ascorbat | 1,89 | 0,5:1 | 10 bis 25 | 10 bis 25 | 10 bis 25 | - | - |
| 28.2 | Na-Ascorbat | 3,78 | 1:1 | 2 bis 5 | < 0,5 | < 0,5 | - | - |
| 28.3 | Na-Ascorbat | 7,56 | 2:1 | < 0,5 | < 0,5 | < 0,5 | - | - |

**Tabelle 10: 100 mmol H₂O₂, entsprechend 9,71 g H₂O₂ (35 gew.-%ig in Wasser)/kg Dispersion PUD 3, entspricht rechnerisch 3400 ppm H₂O₂, Messergebnis > 1000 ppm H₂O₂, jeweils vor Zugabe des Additivs**

| | | | | gemessene Konzentration H₂O₂ [ppm] | | | | |
|---|---|---|---|---|---|---|---|---|
| Nr. | Additiv | Menge an Additiv [g] | molares Verhältnis Additiv : H₂O₂ | direkt nach Zugabe des Additivs | 1 Tag nach Zugabe des Additivs | 3 Tage direkt Zugabe des Additivs | 1 Woche nach Zugabe des Additivs | 2 Woche nach Zugabe des Additivs |
| 29.1 | Na-Ascorbat | 9,45 | 0,5:1 | 0,5 bis 2 | 0,5 bis 2 | 10 bis 25 | - | - |
| 29.2 | Na-Ascorbat | 18,9 | 1:1 | < 0,5 | < 0,5 | < 0,5 | - | - |
| 29.3 | Na-Ascorbat | 37,8 | 2:1 | < 0,5 | < 0,5 | < 0,5 | - | - |

Alle Tabellenwerte wurden mit QUANTOFIX® Peroxid 25, 0 bis 25 mg/l H₂O₂ bestimmt. "-" bedeutet, dass keine Messungen durchgeführt wurde.

Die Wirkungsweise der der Additive ist offensichtlich. Bereits unmittelbar nach Zusatz dieser Additive fällt die H₂O₂-Konzentration deutlich unter den Wert der Dispersion vor Zusatz der Additive ab.

### Biozide Wirkung und Zerstörung der bioziden Wirkung durch Zusatz des Antioxidans (BODE Dip Slides Combi-Test):

Die Untersuchungen werden gemäß des dem Test beiliegenden Beipackzettels (Gebrauchsanweisung) durchgeführt. Der Deckel des BODE Dip Slide Combi-Teströhrchens mit dem Nährbodenträger wird abgeschraubt und dem Teströhrchen entnommen. Der Nährbodenträger wird 5 bis 10 Sekunden in die Polyurethan-Polyharnstoff-Dispersion eingetaucht. Überschüssige Polyurethan-Polyharnstoff-Dispersion wird gut abtropfen gelassen. Der untere Rand des Nährbodenträgers wird mit einem sauberen Filterpapier abgetupft. Der so präparierte Nährboden wird wieder in das Teströhrchen zurückgegeben und verschraubt. Das Teströhrchen mit dem präparierten Nährboden wird in einer Klimakammer bei 35 °C gelagert. Das Bakterienwachstum auf dem Nährboden kann durch visuellen Vergleich des Nähbodenträgers mit der im Beipackzettel gezeigten Vergleichsskala ermittelt werden.

Die Skala bildet die Anzahl an KBE (Koloniebildende Einheiten) zwischen 10² KBE und 10⁷ KBE ab. Bis 10⁴ KBE gilt die Probe als sehr schwach bis schwache kontaminiert, ab 10⁶ KBE gilt die Probe als stark bis sehr stark kontaminiert.

Die mit Bakterien kontaminierte Polyurethan-Polyharnstoff-Dispersion PUD 1 (Versuch 30) wurde mit 20 mmol/kg bzw. 100 mmol/kg Wasserstoffperoxid-Lösung versetzt (Versuch 31 bzw. 32).

Unmittelbar nach Zugabe der Wasserstoffperoxid-Lösung erfolgte der Zusatz der Natriumascorbat-Lösung zur Vernichtung des Wasserstoffperoxids (Versuch 33 bzw. 34). Unmittelbar nach dem Zusatz der Natriumascorbat-Lösung wurden die Proben mit 10 g der kontaminierten PUD 1 geimpft (Versuch 35 bzw. 36). Die Resultate werden in Tabelle 11 gezeigt:

**Tabelle 11: Resultate des BODE Dip Slides Combin-Tests**

| Versuch | 30 | 31 | 32 | 33 | 34 | 35 | 36 |
|---|---|---|---|---|---|---|---|
| PUD 1 [g] | 100 | 99,81 | 99,03 | 99,81 | 99,03 | 99,81 | 99,03 |
| Wasserstoffperoxid (35%ig in Wasser) [g] | - | 0,19 | 0,97 | 0,19 | 0,97 | 0,19 | 0,97 |
| Natriumascorbat-Löung (10%ig in Wasser) [g] | - | - | - | 7,56 | 37,8 | 7,56 | 37,8 |
| PUD 1 [g] | - | - | - | - | - | 10 | 10 |
| Dip-Test [t] | 2 Tage | 7 Tage | 7 Tage | 7 Tage | 7 Tage | 7 Tage | 7 Tage |
| Ergebnis Dip-Test [KBE] | 10⁷ | < 10² | < 10² | 10⁵ | 10⁵ | 10⁷ | 10⁷ |

| | | | | | | | |
|---|---|---|---|---|---|---|---|
| Alle Angaben in der Tabelle in [g] | | | | | | | |

Die Kontamination der PUD 1 mit Bakterien ist offensichtlich. Bereits nach 2 Tagen Dip-Test wird die Probe (Versuch 30) mit 10⁷ KBE bewertet, d.h. es liegt eine starke bis sehr starke Kontamination vor.

Die Wirkung von Wasserstoffperoxid wird auch im Dip-Test bestätigt. Nach Zusatz von 20 mmol/kg bzw. 100 mmol/kg Wasserstoffperoxid (35%ige Lösung in Wasser) zu der kontaminierten PUD 1 wird nach 7 Tagen ein Wert von < 10² KBE, d.h. es liegt eine sehr schwache bis schwache Kontamination vor, festgestellt (Versuche 31 und 32).

Die Vernichtung des Wasserstoffperoxids nach Zusatz der 10%igen Natriumascorbat-Lösung (Molares Verhältnis Natriumascorbat : Peroxid = 2:1) ist ebenfalls offensichtlich, siehe Versuche 33 und 34.

Durch das Impfen der zunächst keimfreien Proben mit der PUD 1 wird nach 7 Tagen eine starke bis sehr starke Kontamination der Probe, siehe Versuche 35 und 36, festgestellt.

## Patentansprüche

1. Wässrige Dispersion enthaltend mindestens ein Polyurethan und mindestens eine Verbindung mit biozider Wirkung, **dadurch gekennzeichnet, dass** die mindestens eine Verbindung mit biozider Wirkung mindestens eine Peroxid-Gruppe enthält und in einer Menge von 0,01 bis 1000 mmol/kg, bezogen auf die gesamte wässrige Dispersion, vorliegt.

2. Wässrige Dispersion nach Anspruch 1, **dadurch gekennzeichnet, dass** das mindestens eine Polyurethan auf Polyetherpolyolen und/oder Polyesterpolyolen und/oder Polycarbonatpolyolen basiert.

3. Wässrige Dispersion nach Anspruch 1 oder 2, **dadurch gekennzeichnet, dass** die mindestens eine Verbindung mit biozider Wirkung ausgewählt ist aus der Gruppe bestehend aus Wasserstoffperoxid, Alkali- und Erdalkaliperoxiden, insbesondere Natriumhyperoxid, Peroxomonoschwefelsäure, Peroxodischwefelsäure, Peressigsäure, Natriumpercarbonat und Mischungen davon.

4. Wässrige Dispersion nach einem der Ansprüche 1 bis 3, **dadurch gekennzeichnet, dass** das mindestens eine Polyurethan in einer Menge von 5 bis 64 Gew.-%, bevorzugt 30 bis 60 Gew.-%, besonders bevorzugt 40 bis 50 Gew.-, jeweils bezogen auf die gesamte wässrige Dispersion, vorliegt.

5. Wässrige Dispersion nach einem der Ansprüche 1 bis 4, **dadurch gekennzeichnet, dass** zusätzlich Komponenten ausgewählt aus Bindemitteln, Hilfs- und Zugschlagstoffen, Füllstoffe, Hilfsmittel, Verlaufsmittel, Reaktiv-Verdünner, Weichmacher, Neutralisationsmittel, Katalysatoren, Hilfslösemittel, Verdicker, Additive, Klebrigmacher und Mischungen davon vorliegen.

6. Verfahren zur Herstellung einer biozidfreien wässrigen Polyurethan-Dispersion, umfassend mindestens die Schritte
(A) Bereitstellen einer wässrigen Dispersion enthaltend mindestens ein Polyurethan und mindestens eine Verbindung mit biozider Wirkung, wobei die mindestens eine Verbindung mit biozider Wirkung mindestens eine Peroxid-Gruppe enthält und in einer Menge von 0,01 bis 1000 mmol/kg, bezogen auf die gesamte wässrige Dispersion, vorliegt, und
(B) Behandeln der wässrigen Dispersion aus Schritt (A) mit mindestens einer antioxidativ wirkenden Verbindung, um die biozidfreie wässrige Polyurethan-Dispersion zu erhalten.

7. Verfahren nach Anspruch 6, **dadurch gekennzeichnet, dass** die mindestens eine antioxidativ wirkende Verbindung ausgewählt ist aus der Gruppe bestehend aus Ascorbinsäure, Salzen der Ascorbinsäure, Cystein, Acetylcystein, L-Glutathion, Methionin und Mischungen davon.

8. Verfahren nach Anspruch 6 oder 7, **dadurch gekennzeichnet, dass** Alkalisalze der Ascorbinsäure, bevorzugt Na-Ascorbat, als antioxidativ wirkende Verbindung verwendet werden.

9. Verfahren nach einem der Ansprüche 6 bis 8, **dadurch gekennzeichnet, dass** die mindestens eine antioxidativ wirkende Verbindung in einem Molverhältnis Peroxid (-O-O-) zu Antioxidans von 0,1 bis 10, besonders bevorzugt 1 bis 3, ganz besonders bevorzugt 1,8 bis 2,2, zugegeben wird.

10. Verfahren nach einem der Ansprüche 6 bis 9, **dadurch gekennzeichnet, dass** nach Schritt (B) mindestens der folgende Schritt (C) durchgeführt wird:
(C) Herstellung von Artikeln, Kosmetika, Beschichtungen; klebstoffschichten oder Klebstoffen aus der in Schritt (B) erhaltenen biozidfreien, wässrigen Polyurethan-Dispersion.

11. Verfahren nach einem der Ansprüche 6 bis 10, **dadurch gekennzeichnet, dass** Schritt (B) bei 5 bis 100 °C, bei 23 bis 50 °C, erfolgt.

12. Verwendung mindestens einer antioxidativ wirkenden Verbindung zur Behandlung einer wässrigen Dispersion enthaltend mindestens ein Polyurethan und mindestens eine Verbindung mit biozider Wirkung, wobei die mindestens eine Verbindung mit biozider Wirkung mindestens eine Peroxid-Gruppe enthält und in einer Menge von 0,01 bis 1000 mmol/kg, bezogen auf die gesamte wässrige Dispersion, vorliegt.
